(19) Europäisches Patentamt
European Patent Office
Office européen des brevets

(11) EP 0 754 200 B1

(12) **EUROPEAN PATENT SPECIFICATION**

(45) Date of publication and mention of the grant of the patent:
**03.05.2000 Bulletin 2000/18**

(21) Application number: **95910195.7**

(22) Date of filing: **07.02.1995**

(51) Int. Cl.$^7$: **C08G 59/18**, C09D 163/00, C08G 59/32

(86) International application number:
**PCT/US95/01545**

(87) International publication number:
**WO 95/26997 (12.10.1995 Gazette 1995/43)**

(54) **EPOXY/AMINE BARRIER COATINGS**

SCHUTZBESCHICHTUNGEN AUS EXPOXYDEN UND AMINEN

REVETEMENTS ISOLANTS EN POLYEPOXYDE-POLYAMINE

(84) Designated Contracting States:
**AT BE CH DE DK ES FR GB GR IE IT LI LU MC NL PT SE**

(30) Priority: **31.03.1994 US 221161**

(43) Date of publication of application:
**22.01.1997 Bulletin 1997/04**

(73) Proprietor:
**PPG Industries Ohio, Inc.**
**Cleveland, OH 44111 (US)**

(72) Inventor: **CARLBLOM, Leland, H.**
**Gibsonia, PA 15044 (US)**

(74) Representative:
**Modiano, Guido, Dr.-Ing. et al**
**Modiano, Josif, Pisanty & Staub,**
**Baaderstrasse 3**
**80469 München (DE)**

(56) References cited:
**EP-A- 0 044 816**
**EP-A- 0 327 039**
**FR-A- 1 255 246**
**US-A- 4 540 750**

- **DATABASE WPI Derwent Publications Ltd., London, GB; AN 84-084486(14) & JP,A,59 033 321 (MITSUBISHI GAS CHEM KK) 23 February 1984**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 754 200 B1

## Description

### BACKGROUND OF THE INVENTION

The present invention relates to resins having gas barrier properties, curable barrier coating compositions utilizing such resins, and to packaging materials and/or containers including the barrier coatings. The barrier coatings substantially reduce the permeability of gases such as carbon dioxide and/or oxygen through packaging materials.

Plastics have found increasing use as replacements for glass and metal containers in packaging, especially of foods and beverages. The advantages of such plastic packaging includes lighter weight, decreased breakage (versus glass) and potentially lower costs. However, shortcomings in the gas-barrier properties of common packaging plastics, such as polyolefins, e.g., polyethylene and polypropylene, poly(ethylene terephthalate) and polycarbonates, present major disadvantages in the packaging of many foods and beverages. For example, many foods and beverages are sensitive to oxidation and must be protected from oxygen to prevent discoloration or other detrimental effects. Further, plastic beverage containers suffer comparative shelf-life problems versus glass or metal due to the loss of carbon dioxide or ingress of oxygen through the plastic container.

In addition to food applications, barrier coatings have utility for plastic medical ampoules and the like and for plastic fuel containers.

Numerous barrier coatings have been developed in the prior art, including barrier materials based on thermoplastic, crystalline resins such as vinylidene chloride or ethylene-vinyl alcohol. Each of these materials has drawbacks. Ethylene-vinyl alcohol-based polymers lose barrier properties upon exposure to water, and packages of this material cannot generally undergo retort, i.e., heating under pressurized steam for pasteurization without loss of barrier performance. Vinylidene chloride-based polymers have been recognized as having excellent gas-barrier properties, but preparation of such vinylidene chloride-based polymers must generally be done under high pressure. Further, since vinylidene chloride-based barrier materials include halogen atoms, the disposal of such materials via incineration poses environmental problems. In addition, both vinylidene chloride-based polymers and ethylene-vinyl alcohol based polymers exhibit loss of adhesion after undergoing retort.

U.S. Parent No. 2,830,721 (Pinsky et al.) discloses a polyamine-polyepoxide barrier coating for plastic containers. The purpose is to reduce the permeation of organic solvents through polyethylene containers. For polymeric food and beverage containers, it would be desirable to provide barrier coatings that have lower oxygen and/or carbon dioxide permeabilities and less sensitivity to humidity than those disclosed in the Pinsky et al. patent.

Barrier coatings with very low permeability based on polyamine-polyepoxide resins with high amine nitrogen content are the subject of commonly owned U.S. Patent Nos. 5,006,381, 5,008,137 and 5,300,541 (all to Nugent et al.). Preferred polyamines disclosed there are polyethylene polyamines such as tetraethylene pentamine. These coatings have found commercial acceptance as barrier coatings for polymeric containers. However, further improvements would be desirable. In particular, it would be desirable to improve the performance of this type of coating under high humidity conditions.

Metaxylylene diamine is known as a curing agent for polyepoxide resins. U.S. Patent No. 4,605,765 (Miyamoto et al.) further discloses the use of the amine functional reaction product of metaxylylene diamine with epichorohydrin as a curing agent for polyepoxide resins. A conventional cure ratio of about one equivalent of amine hydrogen in the reaction product per epoxy group is disclosed.

The prior art (e.g., U.S. Patent Nos. 4,908,272; 4,983,719; and 5,028,462) disclose reacting meta or para xylylenediamine with organic acids to form amides that serve as gas barrier layers. These amides are not liquids that can be used as coatings.

### SUMMARY OF THE INVENTION

The present invention is an improvement in polyepoxide-polyamine resin based liquid barrier coatings which are suitable for use on polymeric containers and other packaging materials. The coatings of the present invention not only have exceptionally low oxygen and/or carbon dioxide permeabilities, but also have the ability to maintain these excellent barrier properties under high humidity conditions considerably better than other polyepoxide-polyamine based barrier coatings.

The barrier coatings of the present invention comprise the reaction product of a polyamine (A) and a polyepoxide (B) at a ratio of active amine hydrogen in (A) to epoxy group in (B) of at least 1.5:1, wherein the polyamine (A) is an ungelled reaction product of:

(I) an initial polyamine in which at least 50% of the carbon atoms are aromatic; and
(II) at least one of the following:

(a) epichlorohydrin;

(b) a polyepoxide having the structure

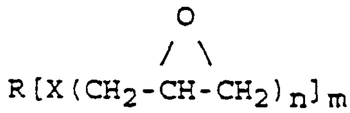

where

R is phenylene or naphthylene;
X is N, NR', $CH_2N$, $CH_2NR'$, O, C(O)-O, or combinations thereof;
R' is an alkyl group containing 1-3 carbon atoms, or a cyanoethyl or cyanopropyl group
n is 1 or 2
m is 2-4;

(c) ; a novolac epoxy resin or a bisphenol F epoxy resin; or

(d) formaldehyde and a phenol of the structure

R"-OH

where

R" is an aromatic group or fused aromatic group which may contain alkyl substitutions of 1-4 carbon atoms.

In particular, it has been discovered that cured films of polyepoxide-polyamine resins having a molecular network that consists predominantly of two molecular groups:

(1) aromatic-containing polyamine groups of the type > NRΦRN < (where R is alkyl containing 1 or 2 carbons); and (2) $-CH_2CH(OH)CH_2-$ groups (2-hydroxypropylene groups) have a surprising ability to maintain low permeability under high humidity conditions. (Φ is used throughout to indicate a benzene ring.) Excellent barrier properties can be attained when the cured film network contains only or substantially only (at least 85 weight percent, preferably at least 90 weight percent, most preferably at least 95 weight percent) of these two molecular groups. A characteristic of the initial polyamine component used in the present invention is that it contains at least fifty percent of its carbon atoms in aromatic rings. In a particularly useful embodiment, R in the > NRΦRN < group contains a single carbon atom, whereby at least seventy percent of the carbon atoms are in the aromatic rings. In a specific example, the polyamine group in the network may be the residue of an initial polyamine which is an aminomethyl poly-substituted benzene or naphthalene, e.g., xylylenediamine.

It should be understood that significant improvements in accordance with the present invention may be attained without the optimum levels of the preferred groups described above. In addition to the preferred groups, the molecular network may contain additional molecular groups such as -O-Φ-O-groups, -O-Φ-N < groups, or combinations thereof while still providing excellent barrier properties under high humidity conditions. While maximizing the content of the preferred molecular groups is generally desirable, it has been found to be additionally advantageous that the content of certain molecular groups be minimized in, or absent from, the cured polymer network. The groups that are preferably avoided include unsubstituted alkyl chains in general (including ethylene groups), particularly alkylene polyamine groups, as well as isopropylidene groups (as in bisphenol A).

The resins of the present invention are based on an initial polyamine that is advantageously reacted preliminarily with one or more of the above materials (a), (b), (c) or (d) to form a polyamine functional adduct.

The polyamine adducts defined above are cured with a polyepoxide compound to form the cured coatings of the present invention. The advantages of the present invention may be attained to some degree with the use of any of the polyepoxides known for use for reacting with polyamines to form cured films. However, preferred embodiments having excellent resistance to loss of barrier properties under high humidity conditions employ polyepoxide curing components having the same characteristics of those used for making the adducts. In other words, the preferred polyepoxides used for curing also contribute to the cured network the preferred molecular groups characterized by aromatic-containing polyamine groups having at least fifty percent aromatic carbon content, 2-hydroxypropylene groups, and optionally, one or both of -O-Φ-O- groups and -O-Φ-N < groups.

It has also been found advantageous for the sake of achieving good barrier properties under high humidity conditions that the polyepoxide used for either forming the polyamine adduct or curing the polyamine adduct not contain a significant amount of glycidyl ether of bisphenol A. However, glycidyl ether of bisphenol F may be acceptable for this purpose, although not preferred. Preferred are polyepoxides containing aminoalkyl groups and aromatic groups, novolac polyepoxides, and resorcinol polyepoxides.

For curing the polyamine functional adduct and the polyepoxide curing agent, a substantial excess of the polyamine component is provided in order to attain good barrier properties. This contrasts with the conventional curing of epoxy-amine resins at ratios of about 1:1 equivalent of amine hydrogen to equivalent of epoxy groups. In the present invention, the cure ratio is at least 1.5:1, preferably at least 2:1, equivalents of amine hydrogen in the polyamine component to equivalent of epoxy groups in the polyepoxide component.

In further accordance with the present invention, a packaging material is provided which includes at least one layer of a relatively gas-permeable polymeric material and at least one layer of a polyamine-polyepoxide barrier coating as defined above. The composite packaging material exhibits gas permeabilities as set forth above in connection with the description of the barrier coating itself. The barrier coating included in the packaging material may be applied to one or more surfaces of the polymeric material, or it may be laminated between two layers of the polymeric material. Stock sheets are contemplated that may be used as wrappings or formed into containers or other articles. Alternatively, a container or other article may be formed from the polymeric material and the barrier coating of the present invention applied onto the surface of the formed article such as by spraying, roll coating, or other conventional method of coating. For these purposes, the barrier coating compositions of the present invention have the rheological characteristics of liquid coating compositions.

## DETAILED DESCRIPTION OF THE INVENTION

By the term "barrier material" as used throughout this description is meant that such a material has a low permeability to gases such as oxygen and/or carbon dioxide, i.e., the material exhibits a high resistance to the passage of oxygen or carbon dioxide through the material. Permeation through a material is a function of the thickness of the material. The barrier materials of the present invention exhibit a combination of relatively high resistance to both carbon dioxide and oxygen, but many applications do not require resistance to both. Therefore, low permeability to either carbon dioxide or oxygen as defined below is sufficient to qualify the material as a "barrier material."

The performance of the barrier coatings of the present invention may be characterized by the small extent to which the permeability differs at high humidity compared to low or moderate humidity, regardless of the magnitude of the permeability. A less than optimum permeability could be compensated for by applying a thicker coating, but it may be impractical to use a coating thick enough to assure good barrier properties even at elevated humidities. Some prior art epoxy-amine barrier coatings have permeabilities at 75 percent relative humidity (R.H.) that are many times greater than at 50 percent R.H. Embodiments of the barrier coatings of the present invention are characterized by permeabilities at 75 percent R.H. which are no more than 5 times greater than at 50 percent R.H., and less than three times in preferred embodiments.

To be useful commercially, the permeability of a barrier coating must lead to a sufficient increase in shelf life of the product to justify the extra cost of the coating. Also to be taken into account is the fact that, although thicker barrier coatings may provide adequate improvements in shelf life, the added cost of the coating may not be economically justified. It is generally desirable for the desired barrier property to be attained with a dry coating no more than 0.025 mm (1 mil) thick, preferably on the order of about 0.013 mm (0.5 mil) or less in order to keep the cost of adding the barrier coating to a container low. At these typical thicknesses, useful improvements in shelf life generally occur when the barrier coating possesses an oxygen permeability constant of less than 0.0023 $cm^3$-mm/100 $cm^2$/bar/day (0.60 cc-mil/100 $in^2$/atm./day) (a standard unit of permeation, measured as cubic centimeters of gas permeating through a one mil thick sample, 100 inches square, over a 24 hour period, under a partial pressure differential of one atmosphere), more notably at an oxygen permeability constant of less than 0.0019 $cm^3$-mm/100 $cm^2$/bar/day (0.50 cc-mil/100 $in^2$/atm./day), and even more advantageously at an oxygen permeability constant of less than 0.0012 $cm^3$-mm/100 $cm^2$/bar/day (0.30 cc-mil/100 $in^2$/atm./day). Prior art polyepoxide-polyamine barrier coatings able to attain the lowest levels of permeability have been found to be particularly sensitive to humidity, whereby the permeability increases substantially at humidities as high as 75 percent R.H. Preferred embodiments of the barrier coatings of the present invention not only have the low permeabilities that permit the use of thin coatings, but also are capable of maintaining these levels of permeability at high humidities, e.g., 75% relative humidity (R.H.).

The highest performing compositions of the present invention exhibit both low initial permeability and minimal increase under high humidity conditions. but it should be apparent that those embodiments that have extremely low initial permeability have greater leeway as to the degree to which permeability may increase under high humidity conditions.

Carbon dioxide permeability of the barrier coatings of the present invention generally parallel those for oxygen. Usually permeability constants for both oxygen and carbon dioxide, as well as other gases, tend to increase or decrease together. Carbon dioxide permeability of less than 0.012 $cm^3$-mm/100 $cm^2$/bar/day (3 cc-mil/100 $in^2$/atmosphere/day) (measured at 30°C and zero percent relative humidity) generally characterize the barrier coatings of the present invention. Preferred embodiments exhibit carbon dioxide permeability of less than about 0.0039 and most preferably less than about 0.0019 $cm^3$-mm/100 $cm^2$/bar/day (less than about 1 and most preferably less than about 0.5 cc-mil/100 $in^2$/atmosphere/day). However, it should be understood that it is not necessary for a barrier coating of the present invention to provide both excellent oxygen barrier properties and excellent carbon dioxide barrier properties to be useful.

Generally, it has been found that as the amount of amine nitrogen in a barrier material increases, gas permeability decreases. In commonly owned U.S. Patent No. 5,300,541 barrier coatings exhibiting the desired permeability levels were characterized as having at least about seven percent by weight amine nitrogen, and preferred embodiments of the present invention may be characterized similarly. However, the primary characteristic of the present invention is the molecular structure of the polymeric network of the cured coating. With this molecular structure, there is greater leeway as to the amine nitrogen content needed for useful barrier properties, particularly for oxygen. Therefore, there is no critical limitation as to minimum amine nitrogen content in the coatings of the present invention, but the embodiments are generally characterized as having at least 5 weight percent amine nitrogen content in the cured film. For the sake of minimizing permeability, there is no theoretical upper limit as to amine nitrogen content, but for practical purposes amine nitrogen contents above 11 weight percent are preferably avoided because higher amine nitrogen contents generally deteriorate the moisture resistance of the coatings.

The polyamine-polyepoxide polymers chat comprise the chief film-forming resin of the barrier coatings of the present invention are cured in situ from two components that are mixed immediately prior to application onto a plastic substrate. One component is a polyamine functional adduct and the other component is a polyepoxide, and the two components are reacted in a ratio of at least 1.5:1 equivalents of active amine hydrogens in the polyamine component to equivalent of epoxy group in the polyepoxide component. The polyamine component comprises a polyamine functional adduct made by reacting an initial monomeric polyamine with one or more of: (a) epichlorohydrin; (b) certain polyepoxides in which a plurality of glycidyl groups are joined to an aromatic member; (c) a novolac epoxy resin or bisphenol F epoxy resin; or (d) formaldehyde and a phenol to form a Mannich base.

Forming the adduct by a preliminary reaction has the advantage of increasing molecular weight while maintaining linearity of the resin, thereby avoiding gellation. Using a polyamine having no more than two primary amino groups to make the adduct serves to avoid gellation. Additionally, the usual time period required for ingestion of epoxy and amine reactants before application onto a substrate is reduced or eliminated by pre-reaction to form an adduct. When an initial polyamine is prereacted to form an adduct, approximately 10 to 80 percent, preferably 20 to 50 percent, of the active amine hydrogens of the polyamine may be reacted with epoxy groups during formation of the adduct. Prereacting fewer of the active amine hydrogens reduces the effectiveness of the prereaction step and provides little of the linearity in the polymer product that is one of the advantages of forming the adduct. Prereacting larger portions of the active amine hydrogens is not preferred because sufficient active amine hydrogen groups must be left unreacted so as to provide reaction sites for reacting during the final curing step.

The initial polyamine monomers used as reactants to make the polyamine functional adduct are characterized by substantial aromatic content. More specifically, at least 50 percent, preferably at least 70 percent of the carbon atoms are in aromatic rings, including fused aromatic rings (i.e., phenylene groups and/or naphthylene groups). These may include aromatic amines in which the amine group is attached directly to the aromatic ring, or preferably aminoalkyl compounds in which amino group is attached to the aromatic group via an alkyl group. Preferably the alkyl group is a small alkyl group, most preferably a methylene group. In the latter case, when the aromatic group is phenylene, the polyamine is xylylenediamine.

In accordance with option (a) above, one of the substances with which the initial monomeric polyamine may be reacted to form the adduct is epichlorohydrin. By carrying out the reaction at polyamine to epichlorohydrin molar ratios greater than 1:1 (preferably 2:1) in the presence of an alkali, a primary reaction product comprises polyamine molecules joined by 2-hydroxypropylene linkages. The reaction of metaxylylenediamine, a preferred polyamine, with epichlorohydrin is described in U.S. Patent No. 4,605,765, and such products are commercially available as "GASKAMINE 328" from Mitsubishi Gas Chemical Company.

Option (b) for forming the adduct involves reacting a polyamine with a select group of polyepoxides having the structure:

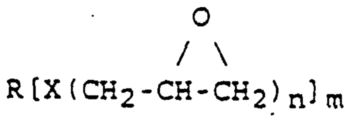

where

R is phenylene or naphthylene;
X is N, NR', $CH_2N$, $CH_2NR'$, O, C(O)-O, or combinations thereof;
R' is an alkyl group having 1-3 carbons, or a cyanoethyl or cyanopropyl group;
n is 1 or 2;
m is 2-4;

These include N,N,N',N'-tetrakis (oxiranylmethyl)-1,3-benzene dimethanamine (available as "TETRAD X" from Mitsubishi Gas Chemical Co.), tetraglycidoxy bis(para-aminophenyl) methane (available as "MY-720" from Ciba-Geigy Corporation), resorcinol diglycidyl ether (such as "HELOXY 69" from Shell Chemical Co.), diglycidyl esters of phthalic acid (such as "EPI-REZ A-100 from Shell Chemical Co.), and triglycidyl para-aminophenol (such as "Epoxy Resin 0500" from Ciba-Geigy Corporation).

Option (c) for forming the adduct entails reaction of the initial polyamine with a novolac epoxy resin or a bisphenol F epoxy resin. Notably excluded are bisphenol A type epoxy resins. Preferred in this group are diglycidyl novolacs such as "DEN-431" from Dow Chemical Co. Alternatives include novolacs with higher glycidyl functionality such as "DEN-438" and "DEN-439" also from Dow Chemical Co.

Option (d) for forming the adduct involves formation of Mannich bases from reaction of the initial polyamine with formaldehyde and phenol. A commercially available example in which the polyamine is metaxylylenediamine is "ANCAMINE 1856" from Pacific Anchor Chemical Corporation division of Air Products and Chemicals, Inc.

The reaction of the polyepoxide and the polyamine to give the ungelled adduct is carried out at temperatures and concentrations of reactants sufficient to obtain the ungelled product and may vary depending upon selection of starting materials. Generally, reaction temperatures may vary from about 40°C to 140°C, with lower temperatures (40°C to 110°C) being preferred for systems susceptible to gelation. Similarly, concentrations of reactants may vary from neat to as low as five percent by weight of reactant in an appropriate solvent depending upon the particular molar ratio and type of reactants. Lower concentrations will generally be required for systems susceptible to gelation. Specific reaction conditions may readily be chosen by one skilled in the art guided by the examples herein. Preparation of an ungelled amine-functional polymeric adduct is described in U.S. Patent No. 5,006,381 (Nugent et al.), and the description of the preparation of such an ungelled resin is incorporated herein by reference.

By the term "ungelled" as used throughout this description is meant that such an amine-functional polymeric resin is a soluble or dispersible reaction product, the resin being fluid under processing conditions of the present invention.

In forming a cured barrier coating from the reaction of an adduct with a polyepoxide, the two components are preferably reacted together at a ratio of active amine hydrogens to epoxy groups of from 10:1 to 1,5:1, more preferably from 5:1 to 2:1. Each amine hydrogen of the amine-functional adduct is theoretically able to react with one epoxy group and is considered as one amine equivalent. Thus, a primary amine nitrogen is considered as difunctional in the reaction with polyepoxides to form the barrier material. Preferably, the cured reaction product contains a substantial number of unreacted amine hydrogens. Maximizing the amount of polyamine reactant is generally desirable for the sake of maximizing barrier properties, but insufficient numbers of epoxy groups may not provide enough crosslinking to yield a strong, moisture resistant, solvent resistant film. Also, the use of more epoxy than the preferred amounts can produce excessive crosslinking and a film that is too brittle.

The polyepoxide component used for curing the polyamine may be any polyepoxide known to those of skill in the an as suitable for coating applications, but preferably comprises one or more of the polyepoxides of categories (b) and (c) described above for use in the adducting stage. When polyepoxides are employed in both the adduct-forming stage and the curing stage, they may be the same polyepoxide or they may be different polyepoxides. Mixtures of either the polyepoxides or polyamines that are recommended herein may be used in place of the pure compounds. Preferably, the polyepoxides used in forming the polyamine adduct and in the curing stage have epoxy functionality of at least 1.4, most preferable about 2 or greater. The presence of small amounts of monoepoxides may not be objectionable.

In the broader aspects of the invention, the polyepoxides used for curing may include polyepoxides that are saturated or unsaturated, aliphatic, cycloaliphatic, aromatic, or heterocyclic, and may be substituted with non-interfering substituents such as hydroxyl groups or the like. Examples include polyglycidyl ethers of aromatic polyols, which may

be formed by etherification of aromatic polyols with epichlorohydrin or dichlorohydrin in the presence of an alkali. Examples include: bis(2-hydroxynaphthyl)methane, 4,4'-dihydroxylbenzophenone, 1,5-dihydroxy-naphthalene and the like. Also included in the broad category of polyepoxides that may be used for curing the adduct are polyglycidyl ethers of polyhydric aliphatic alcohols including cyclic and polycyclic alcohols.

The epoxy group equivalent weight of the polyepoxide is preferably minimized so as to avoid unnecessarily introducing molecular groups into the cured polymeric network that are not the preferred groups of this invention. Generally, the polyepoxides have molecular weights above about 86, preferably from 200 to 1000, more preferably from 200 to 800, and have epoxy equivalent weights of above 43, preferably from 60 to 350, more preferably from 90 to 250.

The cured polymeric network of the barrier coating comprises the residues of the polyamine and polyepoxide components. The preferred embodiments have been found to be those with high content of aminomethyl substituted benzene or naphthalene (e.g., > $N-CH_2-\Phi-CH_2-N$ <, the residue of xylylenediamine groups) linked with 2-hydroxypropylene groups ($-CH_2-CH(OH)-CH_2-$, the residue of glycidyl groups). These embodiments have networks comprising at least 50 percent, more preferably 55 percent, most preferably 60 percent on a weight basis of the residues of aminomethyl polysubstituted benzene or naphthalene, preferably the residues of xylylenediamine. The 2-hydroxypropylene groups of the preferred embodiments comprise 20 to 40 percent by weight of the cured network. Some of the most preferred embodiments are characterized by cured networks in which the combination of aminomethyl substituted benzene or napthalene and 2-hydroxypropylene groups comprise 75 to 100 percent by weight of the cured network. Examples of these embodiments include metaxylylenediamine adducted with epichorohydrin or with N,N,N',N' tetrakis (oxiranylmethyl)-1,3-benzene dimethanamine (TETRAD X) and cured with TETRAD X.

Also found to be very effective are cured networks in which some of the aminomethyl substitutions are replaced with oxy substitutions, i.e., -O-Φ-O-groups. These may be introduced into the network by adducting the initial polyamine with the polyglycidyl ethers of polyphenols, e.g., diglycidyl ether of resorcinol, or by curing one of the preferred adducts with such a polyglycidyl ether of a polyphenol. Additionally effective are mixed substitutions such as -O-Φ-N < as would be the residue of adducting or curing with triglycidyl para-aminophenol. Thus the most preferred embodiments of the present invention are those comprising a cured polymer network at least 85 weight percent, preferably at least 90 weight percent, most preferably at least 95 weight percent, of which includes aminomethyl polysubstituted benzene or naphthalene groups in combination with 2-hydroxypropylene groups, and optionally -O-Φ-O- groups and/or -O-Φ-N < groups.

Although not exhibiting performance as outstanding as the preferred embodiments, polyepoxide-polyamine barrier coatings improved over those of the prior art were obtained when the cured network included, in place of the preferred groups described above, substantial amounts of $-O-\Phi-CH_2-\Phi-O-$ groups, which are the residues of novolac epoxy resins or bisphenol F epoxy resins. Some improvements were also found with -O-C(O)-Φ-C(O)-O groups in the network derived from diglycidyl esters of aromatic acids, and with the residues of aromatic Mannich base diamines which contribute > $N-CH_2-\Phi-CH_2-N-CH_2-\Phi-OH$ structures to the network.

It should be apparent that the desired molecular groups may be introduced into the cured polymeric network by the initial polyamine, the polyamine adduct, or the polyepoxide curing component. It should also be apparent that the various substitutions on the aromatic members described above may be provided in combination with each other on the same molecule in the reactants.

The diglycidyl ethers of an aromatic polyol such as bisphenol A or an aliphatic alcohol such as 1,4-butanediol are not preferred in the present invention, but may be tolerated when used to cure preferred embodiments of the polyamine adduct. Diglycidyl ethers of bisphenol F are preferred over bisphenol A based epoxides for the sake of low oxygen permeability. It is theorized that the presence of methyl groups in bisphenol A has a detrimental effect on oxygen barrier properties. Thus, isopropylidene groups are preferably avoided. Other unsubstituted alkyl groups are believed to have a similar effect, and constituents containing such groups are preferably avoided in the present invention.

Solvents for use in the composition of the present invention must be compatible with the plastic substrates being coated and should be chosen so as to provide desirable flow properties to the liquid composition upon application. Suitable solvents for use with the compositions of the present invention are preferably oxygenated solvents, such as glycol ethers, e.g., 2-methoxyethanol, 2-ethoxyethanol, 2-propoxyethanol, 2-butoxyethanol, 1-methoxy-2-propanol and the like, or alcohols such as methanol, ethanol, propanol and the like. Glycol ethers, such as 2-butoxyethanol and 1-methoxy-2-propanol, are more preferred with 1-methoxy-2-propanol being most preferred. The use of 1-methoxy-2-propanol is preferred for its rapid evaporation rate, which minimizes solvent retention in the cured film. In order to obtain desired flow characteristics in some of the embodiments using a prereacted adduct, use of 2-butoxyethanol may be preferred. In embodiments not requiring slow evaporating solvents for the sake of flow properties, the solvents listed here may be diluted with less costly solvents such as toluene or xylene. The solvent may also be a halogenated hydrocarbon, for example, a chlorinated hydrocarbon, such as methylene chloride. 1,1,1-trichloroethane and the like (usually considered fast evaporating solvents), may be especially useful in obtaining cured barrier films. Mixtures of such solvents may also be employed. Non-halogenated solvents are preferred where the resultant barrier material is desired to be halide-free. The resin may also be in an aqueous medium, i.e., the ungelled amine-functional polymeric resin may be an aqueous solution or dispersion. For example, when the polyepoxide used in curing the coating is a water-soluble polyepoxide, e.g., the polyglycidyl ether of an aliphatic diol such as butanediol, the ungelled amine-functional polymeric resin can be utilized as an aqueous solution. Otherwise, with water-insoluble polyepoxides, the ungelled amine-functional polymeric resin can have sufficient amine groups neutralized with an organic acid, such as formic acid, lactic acid, or acetic acid, or with an inorganic acid, such as hydrochloric acid or phosphoric acid, to allow solubilization of the ungelled amine-functional polymeric resin in an aqueous medium. An organic acid is preferably used.

The present invention is further concerned with packaging materials and containers formed of a barrier material or packaging materials and containers including a barrier material. Such packaging materials and/or containers would be desired to have some or all of the following properties:(1) low oxygen permeability, e.g., for the protection of package contents such as food from external oxygen, (2) low carbon dioxide permeability, e.g., for the retention of carbon dioxide gas within a container, (3) good adhesion to gas-permeable polymeric materials used in forming multilayer packaging materials or multilayer containers, (4) resistance to substantial change in permeability under high humidity conditions, (5) good flexibility, (6) high impact resistance, (7) low processing and cure temperatures for use with heat-sensitive substrates, e.g., certain gas-permeable polymeric materials, (8) high gloss, and (9) good clarity. In addition, the barrier materials utilized in packaging materials or containers of this invention can be and are preferably characterized as halide-free.

In the packaging materials and containers of the present invention, barrier materials formed from the coating compositions of the present invention may be used in combination with any polymeric material used in conventional packaging materials and containers, e.g., polyolefins such as polyethylene or polypropylene, polyesters such as poly(ethylene terephthalate), polycarbonates and the like. Many polymeric materials, such as, e.g., polyolefins and polycarbonates, are known to be very gas-permeable. The term "gas-permeable" is used herein to mean that such a polymeric material has a gas permeability greater than that of the barrier materials, usually at least twice as great. Gas-permeable polymeric materials are generally more limited for use as packaging of oxygen-sensitive foods or beverages, or for packaging of carbonated beverages. The herein described barrier materials are especially suitable for use in combination with polymeric materials such as polyolefins or polycarbonates. Polyolefins and polycarbonate materials have both high oxygen permeabilities and carbon dioxide permeabilities, i.e., values generally greater than 100 cubic centimeters (cc) of oxygen and greater than 250 cc of carbon dioxide permeating a 0.025 mm (one-mil) thick sample, 645 cm square (100 inches square) over a 24-hour period under an oxygen or carbon dioxide partial pressure differential respectively of 1.01 bar (one atmosphere) [0.39 $cm^3$-mm/100 $cm^2$/bar/day (100 cc-mil/100 $in^2$/ day/atmosphere)] at 23°C and a relative humidity of zero. The containers or packaging materials of this invention may also incorporate one or more other polymeric materials such as, e.g., polyvinylidene chloride, polyacrylonitrile, polystyrene, acrylonitrile-styrene copolymers, polyamides, polyfluorocarbons, and blends or other combinations of such materials.

The barrier materials can be applied as either solvent or aqueous-based thermosetting coating compositions onto other polymeric materials, e.g., packaging materials or containers, by any conventional means such as spraying, rolling, dipping, brushing and the like. Spray applications or roll applications are preferred. For example, conventional spray techniques and equipment for applying curable coating components can be utilized.

Generally, the solution of the amine-functional polymeric resin ready for application will have a weight percent of resin solids in the range of from about 15 percent by weight to about 50 percent by weight, preferably from about 25 to about 40 percent by weight for embodiments employing the prereacted adduct approach. Higher weight percent solids may present application difficulties, particularly with spray application, while lower weight percentages will require removal of greater amounts of solvent during a heat-curing stage. For the embodiments using direct reaction of the polyamine and polyepoxide, solids contents above 50 percent can be applied successfully.

Coating compositions of this invention can further include other additives including pigments, catalysts for coating compositions which involve an epoxy-amine reaction, silicones or surfactants. For example, the addition of pigments can further reduce the gas permeability of the resultant barrier material. Among the useful pigments in decreasing the gas permeabilities may be included titanium dioxide, micas, silica pigments, talc and aluminum or glass particulates, e.g., flakes. Micas, aluminum flakes and glass flakes may be preferred due to a plate-like structure of such pigments. Generally, when pigments are included in the coating compositions, the weight ratio of pigment to binder is about 1:1, preferably about 0.3:1, and more preferably about 0.05:1, the binder weight being the total solids weight of the polyamine-polyepoxide resin in the coating composition.

Silicones may be included in coating compositions of this invention to assist in wetting of gas-permeable polymeric surfaces. Suitable silicones include various organosiloxanes such as polydimethylsiloxane, polymethylphenylsiloxane and the like. Exemplary are SF-1023 silicone (a polymethylphenylsiloxane available from General Electric Co.), AF-70 silicone (a polydimethylsiloxane available from General Electric Co.), and DF-100 S silicone (a polydimethylsiloxane available from Mazer Chemicals, a division of PPG Industries, Inc.) Such silicones may be added to the coating compositions in amounts of from about 0.01 to about 1.0 percent by weight based on total resin solids in the composition.

Surfactants may be included in aqueous-based coating compositions of the present invention, such as when

the ungelled amine-functional polymeric resins are in aqueous solution. Such surfactants may generally be any suitable nonionic or anionic surfactant and may be employed at levels of about 0.01 to about 1 percent by weight basis total weight of the solution.

Among the catalysts which may be included in the coating compositions are those generally used for epoxy-amine reactants such as dihydroxy aromatics (e.g., resorcinol), triphenyl phosphite, calcium nitrate and the like.

In application of a thermosetting coating composition onto a substrate to form a layer of a barrier material, the components of a coating composition. e.g., a polyepoxide and the ungelled amine-functional polymeric resin, are first thoroughly mixed and then applied by appropriate means such as spaying. After mixing, the coating composition can also be held for a period of time (referred to as an ingestion time) from about 5 minutes to about 60 minutes prior to application to improve cure and clarity. This ingestion time can generally be eliminated when the polyamine is a prereacted adduct or when the solvent is 2-butoxyethanol. After application of the coating composition, it may be cured at temperatures as low as ambient temperature, i.e., about 21°C (70°F), by allowing for a gradual cure over several hours to several days or longer. However, such low temperature curing is slower than desired for commercial production lines and is not as efficient in removing solvent from the cured coating. Therefore, it is preferred that the coating be cured by heating at elevated temperatures as high as possible without distorting the plastic substrates and sufficiently high to effectively drive the particular solvent from the coating. For a relatively "slow" solvent, that is, a solvent having a relatively low evaporation rate, temperatures from about 54°C (130°F) to about 110°C (230°F), preferably from about 71°C (160°F) to about 93°C (200°F) for from about 1 minute to about 60 minutes may be suitable. For relatively "fast" solvent, that is a solvent having relatively high evaporation rate, temperatures in the range of 38°C (100°F) to 71°C (160°F), preferably from about 49°C (120°F) to 66°C (150°F), may be suitable. The thermosetting coating composition may be applied and cured as a single layer or may be applied as multiple layers with multiple heating stages to remove solvent from each subsequent layer.

Multilayer packaging materials of the present invention comprise at least one layer of a gas-permeable polymeric material and at least one layer of a barrier material that is the cured reaction product as described herein. In one embodiment, a laminate including a barrier layer may be formed, e.g., by spray application of the coating composition onto a first layer of a gas-permeable polymeric material. Thereafter, a second layer of a similar or dissimilar gas-permeable polymeric material may be applied over the barrier layer to form a laminate and heated as previously described or optionally heated under pressure.

In embodiments of multilayer packaging material of the present invention in which polypropylene (or any other polyolefin) is the gas-permeable polymeric material, the surface of the polypropylene is preferably treated to increase surface tension by, e.g., flame-treating, corona-treating and the like, all of which are well known to those skilled in the art. Such treatments are described in detail by Pinner et al. in Plastics: Surface and Finish, Butterworth & Co. Ltd. (1971), Chapter 3, on surface treatments for plastic films and containers, and this description of surface treatments is herein incorporated by reference. Such treatments promote better adhesion of the barrier layer to polyolefin material.

The above-described multilayer packaging materials may be formed into containers by conventional plastic processing techniques. For example, sheets, films, and other structures may be formed by well known lamination or extrusion techniques. Film or sheet material made from the multilayer packaging material may be formed into articles such as wrappers, bags and the like.

Optionally, containers including at least one layer of a gas-permeable polymeric packaging material can be pre-formed into any desired shape and then at least one layer of a barrier coating of the present invention can be applied onto the preformed container in a similar manner as described for the multilayer packaging materials. The multilayer containers and multilayer packaging materials of the present invention are ideally suited for packaging of food, beverages, medicines and like substances. The principal advantage of the packaging materials and containers of this invention is the overall reduction in the transport of gases through the container walls. To achieve this reduction it is not necessary that the entire surface area of the container be coated with the barrier material. The barrier materials of the preferred embodiments of the present invention are capable of such significant reductions in permeability that coating, for example, only about 50 percent or less of the container's surface area may yield a major increase in self life of the product. Coating only a portion of the surface area is advantageous in that the coating process may be simplified by applying the barrier material only onto areas of the container that are relatively easy to coat, such as the vertical side walls. The barrier material may also be limited to areas on the container that are to be covered by a label or other opaque material, thereby lessening the appearance requirements for the barrier material. The lower the permeability of the uncoated packaging material, the smaller the area that need be coated with the barrier material of the present invention. For example, containers of poly(ethylene terephthalate) have sufficiently good barrier properties that they are particularly suitable for partial coatings of the barrier material.

The multilayer packaging material and containers of the present invention do not require the use of adhesives, tie layers or the like between the respective gas-permeable polymeric materials and the barrier materials.

While barrier materials of this invention have been described as useful as coatings on a variety of gas permeable polymeric materials, it should be readily apparent to those reading this specification that such barrier materials

may be utilized otherwise than with gas permeable polymeric materials and may be useful, e.g., as coatings on metal surfaces where contact with, e.g., oxygen, is sought to be minimized. Such barrier materials may also be used without any other polymeric material. For example, such barrier materials may be formed into thin films such as those films commonly sold for home use storage of, e.g., food items in refrigerators and/or freezers.

It is an advantage that the cured barrier coatings of the present invention are thermoset polymers. This is preferred for food and beverage containers so that rubbing of adjacent containers during transit does not cause localized softening of the barrier coatings and possible damage to the coating.

The present invention is more particularly described in the following examples which are intended as illustration only since numerous modifications and variations will be apparent to those skilled in the art.

The following description of Adducts A through P are examples of the preparation of ungelled amine-functional polymeric adducts that are subsequently cured to form barrier materials by reaction with polyepoxide as will be described in a subsequent section.

ADDUCT A

An ungelled epoxy-amine adduct was prepared as follows. A reaction vessel was charged with 1 mole (136 grams) of MXDA and 835 grams of 1-methoxy-2-propanol. The admixture was heated to 100°C under a nitrogen atmosphere, and a mixture of 0.857 mole (322 grams) of EPON 828 and 1980 grams of 1-methoxy-2-propanol was added over 1 hour. The reaction mixture was held at 100°C for a total of about 2 hours. The mixture was then cooled to 70°C and vacuum stripped. The resultant material had a theoretical molecular weight of about 3100, a percent solids as measured at 110°C for one hour of 29.0, and a theoretical amine hydrogen equivalent weight of about 200.

ADDUCT B

An ungelled epoxy-amine adduct was prepared as follows. A reaction vessel was charged with 0.5 mole (68 grams) of MXDA and 418 grams of 1-methoxy-2-propanol. The admixture was heated to 100°C under a nitrogen atmosphere, and a mixture of 0.429 mole (112 grams) of Heloxy 69 (resorcinol diglycidyl ether) and 685 grams of 1-methoxy-2-propanol was added over 1 hour. The reaction mixture was held at 100°C for a total of about 2 hours. The mixture was then cooled to 70°C and vacuum stripped. The resultant material had a theoretical molecular weight of about 2510, a percent solids as measured at 110°C for one hour of 52.1, and a theoretical amine hydrogen equivalent weight of about 157.

ADDUCT C

An ungelled epoxy-amine adduct was prepared as follows. A reaction vessel was charged with 1 mole (136 grams) of MXDA and 408 grams of 1-methoxy-2-propanol. The admixture was heated to 100°C under a nitrogen atmosphere, and a mixture of 0.25 mole (100 grams) of Tetrad X and 300 grams of 1-methoxy-2-propanol was added over 1 hour. The reaction mixture was held at 100°C for a total of about 2 hours. The resultant material had a theoretical molecular weight of about 900, a theoretical percent solids of 25.0, and a theoretical amine hydrogen equivalent weight of about 78.

ADDUCT D

An ungelled epoxy-amine adduct was prepared as follows. A reaction vessel was charged with 0.875 mole (119 grams) of MXDA and 674 grams of 1-methoxy-2-propanol. The admixture was heated to 100°C under a nitrogen atmosphere, and a mixture of 0.25 mole (100 grams) of TETRAD X and 567 grams of 1-methoxy-2-propanol was added over 2 hours. The reaction mixture was held at 100°C for a total of about 2 hours. The mixture was then cooled to 70°C and vacuum stripped. The resultant material had a theoretical molecular weight of about 1670, a percent solids as measured at 110°C for one hour of 29.8, and a theoretical amine hydrogen equivalent weight of about 87.

ADDUCT E

An ungelled epoxy-amine adduct was prepared as follows. A reaction vessel was charged with 0.5 mole (68 grams) of MXDA and 418 grams of 1-methoxy-2-propanol. The admixture was heated to 100°C under a nitrogen atmosphere, and a mixture of 0.227 mole (88 grams) of DEN-431 epoxy and 538 grams of 1-methoxy-2-propanol was added over 2 hours. The reaction mixture was held at 100°C for a total of about 2 hours. The mixture was then cooled to 70°C and vacuum stripped. The resultant material had a theoretical molecular weight of about 700, a percent solids as measured at 110°C for one hour of 26.9, and a theoretical amine hydrogen equivalent weight of about 104.

ADDUCT F

An ungelled epoxy-amine adduct was prepared as follows. A reaction vessel was charged with 1 mole (189 grams) of tetraethylenepentamine and 1161 grams of 1-methoxy-2-propanol. The admixture was heated to 100°C under a nitrogen atmosphere, and a mixture of 0.857 mole (322 grams) of EPON-828 epoxy and 1979 grams of 1-methoxy-2-propanol was added over 1 hour. The reaction mixture was held at 100°C for a total of about 2 hours. The mixture was then cooled to 70°C and vacuum stripped. The resultant material had a theoretical molecular weight of about 3600, a percent solids as measured at 110°C for one hour of 30.1, and a theoretical amine hydrogen equivalent weight of about 98.

ADDUCT G

An ungelled epoxy-amine adduct was prepared as follows. A reaction vessel was charged with 1 mole (189 grams) of tetraethylenepentamine and 1161 grams of 1-methoxy-2-propanol. The admixture was heated to 100°C under a nitrogen atmosphere, and a mixture of 0.25 mole (100 grams) of TETRAD X epoxy and 614 grams of 1-methoxy-2-propanol was added over 1 hour. The reaction mixture was held at 100°C for a total of about 2 hours. The mixture was then cooled to 70°C and vacuum stripped. The resultant material had a theoretical molecular weight of about 1160, a percent solids as measured at 110°C for one hour of 32.7, and a theoretical amine hydrogen equivalent weight of about 48.

ADDUCT H

An ungelled epoxy-amine adduct was prepared as follows. A reaction vessel was charged with 1 mole (103 grams) of diethylenetriamine and 240 grams of 1-methoxy-2-propanol. The admixture was heated to 100°C under a nitrogen atmosphere, and a mixture of 0.25 mole (100 grams) of TETRAD X and 233 grams of 1-methoxy-2-propanol was added over 2 hours. The reaction mixture was held at 100°C for a total of about 2 hours. The resultant material had a theoretical molecular weight of about 800, a theoretical percent solids of 30.0, and a theoretical amine hydrogen equivalent weight of about 51.

ADDUCT I

An ungelled epoxy-amine adduct was prepared as follows. A reaction vessel was charged with 1 mole (60 grams) of ethylenediamine and 140 grams of 1-methoxy-2-propanol. The admixture was heated to 100°C under a nitrogen atmosphere, and a mixture of 0.25 mole (100 grams) of TETRAD X and 233 grams of 1-methoxy-2-propanol was added over 2 hours. The reaction mixture was held at 100°C for a total of about 2 hours. The resultant material had a theoretical molecular weight of about 650, a theoretical percent solids of 30.0, and a theoretical amine hydrogen equivalent weight of about 53.

ADDUCT J

This adduct is commercially available as "GASKAMINE 328" from Mitsubishi Gas Chemical Co., and is an adduct of metaxylylenediamine with epichlorohydrin at a molar ratio of about 2:1 metaxylylenediamine to epichlorohydrin.

ADDUCT K

Ethylenediamine (240 grams, 4 moles), sodium hydroxide (80 grams, 2 moles), and water (80 grams) were charged into a 2 liter flask equipped with a mechanical stirrer, a thermocouple, a nitrogen inlet, and an addition funnel. Epichlorohydrin (185 grams, 2 mole) was added dropwise to the flask at room temperature over a period of one hour. Reaction temperature was controlled below 60°C by a cold water bath. After completing the addition, the reaction mixture was held at 100°C for three hours. The flask was cooled to 30°C and water was stripped out of the flask by low vacuum. The reaction mixture stood overnight, after which the product was isolated by centrifuging the salt.

ADDUCT L

Diethylenetriamine (412 grams, 4 moles), sodium hydroxide (80 grams, 2 moles), and water (80 grams) were charged into a 2 liter flask equipped with a mechanical stirrer, a thermocouple, a nitrogen inlet, and an addition funnel. Epichlorohydrin (185 grams, 2 moles) was added dropwise to the flask at room temperature over a period of three

hours. Reaction temperature was controlled below 60°C by a cold water bath. After completing the addition, the reaction mixture was held at 110°C for three hours. The reaction mixture was cooled to room temperature and 500 milliliters of a 1:1 mixture of n-butanol and water were added to the flask and stirred for 30 minutes at room temperature. The organic layer was separated by separatory funnel and was dried by anhydrous magnesium sulfate. The n-butanol in the organic layer was stripped off by vacuum distillation and the product in the flask was collected.

ADDUCT M

This adduct is a Mannich base obtained from the reaction of metaxylylenediamine with phenol and formaldehyde. Adduct M is commercially available as "ANCAMINE 1856" from Pacific Anchor Chemical Corporation division of Air Products and Chemicals, Inc.

ADDUCT N

This adduct is a Mannich base obtained from the reaction of diethylene triamine with phenol and formaldehyde. Adduct N is commercially available as "ANCAMINE 1637" from Pacific Anchor Chemical Corporation division of Air Products and Chemicals, Inc.

ADDUCT O

This adduct is a Mannich base obtained from the reaction of a cycloaliphatic amine with phenol and formaldehyde. Adduct O is commercially available as "ANCAMINE MCA" from Pacific Anchor Chemical Corporation division of Air Products and Chemicals, Inc.

ADDUCT P

An ungelled epoxy-amine adduct was prepared as follows. A reaction vessel was charged with 0.5 mole (94.5 grams) of tetraethylenepentamine and 221 grams of 1-methoxy-2-propanol. The admixture was heated to 100°C under a nitrogen atmosphere, and a mixture of 0.227 mole (88 grams) of DEN-431 epoxy and 204 grams of 1-methoxy-2-propanol was added over 2 hours. The reaction mixture was held at 100°C for a total of about 2 hours. The resultant material had a theoretical molecular weight of about 800, a percent solids as measured at 110°C for one hour of 28.9, and a theoretical amine hydrogen equivalent weight of about 61.

COATING PREPARATION AND TESTING

Samples for oxygen permeability testing were prepared from each of the adducts described above and cured with various polyepoxides. The results are set forth in Table I. In most of the examples the adduct was cured with either "DEN-431" from Dow Chemical Company, a epoxy novolac resin, or with "TETRAD X" from Mitsubishi Gas Chemical Company, a tetraglycidyl reaction product of metaxylylene diamine. Each examples in which the curing polyepoxide was "DEN-431," it was used in such an amount that the ratio of equivalents of active amine hydrogens in the adduct to equivalents of epoxy groups in the curing polyepoxide was 2.8:1. In those cases in which "TETRAD X" was used as the curing polyepoxide, the ratio was 2.3:1. In Example 19 the curing polyepoxide was "EPON 828," a diglycidyl ether of bisphenol A from Shell Chemical Company, in which case the cure ratio was 3:1. In Example 28 the curing polyepoxide was "EPON 862," a diglycidyl ether of bisphenol F from Shell Chemical Company, in which case the cure ratio was 3:1. In Example 20 the curing polyepoxide was "HELOXY® 69," a diglycidyl ether of resorcinol from Shell Chemical Company, in which case the cure ratio was 2.3:1. In Example 21 the curing polyepoxide was "EPI-REZ® A-100," an diglycidyl ester of phthalic acid from Shell Chemical Company, in which case the cure ratio was 2.1:1. In Example 27 the curing polyepoxide was "Epoxy Resin 0500," a triglycidyl para-aminophenol from Ciba-Geigy Corporation, in which case the cure ratio was 2.3:1.

Each coating example preparation involved adding to a sample container one of the polyamine adducts A through P described above in 1-methoxy-2-propanol ("DOWANOL® PM" from Dow Chemical Company), a small amount of water (about 3-5 percent of resin solids), and a small amount of "SF-1023" silicone surfactant from General Electric (about 0.2 percent based on resin solids). The sample was stirred by hand until homogeneous, and a sufficient amount of the polyepoxide was added to yield the above-stated NH/epoxy ratios. The sample was again stirred until homogeneous and then allowed to stand for a length of time adequate to allow sufficient ingestion to occur such that clear films could be obtained (about one hour). Sufficient 1-methoxy-2-propanol was included to yield a coating composition of 35-40 percent solids. A 0.68 mm (0.028 inch) wire wound bar was used to draw down the sample on 0.5 mm (2 mil) polyethylene terephthalate (PET) film. The coated film sample was heated for 30 minutes at 63°C (145°F) in a

laboratory oven to produce a cured coating of about 0.013-0.015 mm (0.5-0.6 mil). The coating sample was allowed to age at ambient temperature for four days prior to testing. Oxygen transmission rates were measured at 30°C using an OXTRAN 1000 for the 0% relative humidity and 20-25% relative humidity results, and an OXTRAN 2/20 for the 50-55% relative humidity and 70-75% relative humidity results. The 20-25 % relative humidity results from the OXTRAN 1000 were obtained using water in the instrument's test gas bubbler tubes. Relative humidities are reported in the tables nominally as 0%, 25%, 50%, and 75%. Oxygen permeability constants for the coating samples were calculated from the results for the coated PET samples using the following equation:

$$\frac{1}{R_1} = \frac{1}{R_2} + \frac{DFT}{P_{O2}}$$

where

$R_1$ = coated PET transmission rate (cc/100 $in^2$/atm./day)
$R_2$ = PET film transmission rate (cc/100 $in^2$/atm./day)
DFT= coating dry film thickness (mil)
$P_{O2}$= oxygen permeability constant of coating (cc-mil/100 $in^2$/atm/day), which can be converted to $cm^3$-mm/100 $cm^2$/bar/day by multiplying the latter value by 0.00389.

TABLE I

| Example No. | Polyamine Adduct | Polyepoxide | $O_2$ Permeability Constants * ** | | | |
|---|---|---|---|---|---|---|
| | | | @ 0% | @ 25% | @ 50% | @ 75% |
| 1+ | A (MXDA+EPON 828) | DEN-431 | 2.62 | 1.60 | 1.18 | 2.19 |
| 2+ | A (MXDA+EPON 828) | TETRAD X | 1.57 | 1.11 | 0.68 | 0.72 |
| 3+ | P (TEPA+DEN-431) | DEN-431 | 1.34 | 0.88 | 0.66 | 1.67 |
| 4+ | P (TEPA+DEN-431) | TETRAD X | 0.22 | 0.09 | 0.16 | 0.65 |
| 5+ | F (TEPA+EPON 828) | DEN-431 | 1.96 | 1.03 | 0.90 | 1.12 |
| 6+ | F (TEPA+EPON 828) | TETRAD X | 0.65 | 0.34 | 0.34 | 0.38 |
| 7+ | G (TEPA+TETRAD X) | DEN-431 | 0.69 | 0.18 | 0.53 | 1.14 |
| 8+ | G (TEPA+TETRAD X) | TETRAD X | 0.05 | 0.04 | 0.15 | 1.51 |
| 9+ | H (DETA+TETRAD X) | DEN-431 | 0.69 | 0.35 | 0.51 | 1.17 |
| 10+ | H (DETA+TETRAD X) | TETRAD X | 0.06 | 0.04 | 0.08 | 0.65 |
| 11+ | I (EDA+TETRAD X) | DEN-431 | 0.73 | 0.46 | 0.52 | 1.14 |
| 12+ | I (EDA+TETRAD X) | TETRAD X | 0.35 | 0.16 | 0.24 | 0.89 |
| 13+ | K (EDA+ epichlorohydrin) | DEN-431 | 11.4 | 5.80 | 3.78 | --- |
| 14+ | K (EDA+epichlorohydrin) | TETRAD X | 1.55 | 0.91 | 1.21 | 0.25 |
| 15+ | L (DETA+ epichlorohydrin) | DEN-431 | 1.09 | 1.44 | 0.99 | 0.95 |
| 16+ | L (DETA+epichlorohydrin) | TETRAD X | 1.09 | 0.65 | 0.51 | 0.41 |
| 17 | J (MXDA+ epichlorohydrin) | DEN-431 | 0.29 | 0.15 | 0.19 | 0.55 |
| 18 | J (MXDA+epichlorohydrin) | TETRAD X | 0.14 | 0.06 | 0.06 | 0.19 |
| 19 | J (MXDA+epichlorohydrin) | EPON 828 | 0.72 | 0.30 | 0.49 | 1.25 |
| 20 | J (MXDA+epichlorohydrin) | RDGE | 0.15 | 0.09 | 0.06 | 0.18 |
| 21 | J (MXDA+epichlorohydrin) | PhDGE | 0.43 | 0.13 | 0.14 | 0.79 |
| 22 | B (MXDA+RDGE) | DEN-431 | 0.51 | 0.24 | 0.46 | 0.91 |
| 23 | B (MXDA+RDGE) | TETRAD X | 0.28 | 0.09 | 0.09 | 0.11 |
| 24 | C (MXDA+TETRAD X) | DEN-431 | 0.57 | 0.20 | 0.31 | 0.82 |
| 25 | C (MXDA+TETRAD X) | TETRAD X | 0.16 | 0.07 | 0.08 | 0.16 |
| 26 | D (MXDA+TETRAD X) | TETRAD X | 0.21 | 0.05 | 0.07 | 0.20 |
| 27 | J (MXDA+ epichlorohydrin) | C-G 0500 | 0.11 | 0.05 | 0.06 | 0.13 |
| 28 | J (MXDA+epichlorohydrin) | EPON 862 | 0.50 | 0.33 | 0.25 | 0.75 |
| 29 | E (MXDA+DEN-431) | DEN-431 | 0.70 | 0.52 | 0.41 | 1.59 |
| 30 | E (MXDA+DEN-431) | TETRAD X | 0.54 | 0.19 | 0.21 | 0.29 |
| 31 | M (MXDA Mannich base) | DEN-431 | 0.65 | 1.05 | 1.27 | 2.59 |
| 32 | M (MXDA Mannich base) | TETRAD X | 0.14 | 0.19 | 0.18 | 0.63 |
| 33+ | N (DETA Mannich base) | DEN-431 | 0.70 | 0.27 | 0.56 | 1.54 |
| 34+ | N (DETA Mannich base) | TETRAD X | 0.16 | 0.09 | 0.21 | 1.18 |
| 35+ | O (cycloaliphatic Mannich base) | DEN-431 | 4.97 | 1.91 | 2.05 | 2.18 |
| 36+ | O (cycloaliphatic Mannich base) | TETRAD X | 5.94 | 1.93 | 1.65 | 1.48 |

* cc-mil/100 $in^2$/atm/day
** to convert to units of $cm^3$-mm/100 $cm^2$/bar/day, multiply the tabulated values by 0.00389
+ comparative

Examples 1 through 16 are comparative examples outside the scope of the present invention containing substantial amounts of polyethylene polyamine groups or bisphenol A groups. Examples 17 through 21, 27, and 28 demonstrate embodiments of the present invention using option (a) type adducts derived from high aromatic content polyamine and Epichlorohydrin. Examples 22 through 26 represent embodiments of the present invention using adducts derived from selected polyepoxides as defined in option (b) above. Examples 29 and 30 represent embodiments of the present invention using adduct derived from novolac polyepoxides or bisphenol F polyepoxides in accordance with option (c). Examples 31 through 36 involve Mannich base type adducts as in option (d), of which Example 32 demonstrates desirable results. Particularly excellent combinations of low oxygen permeability and resistance to humidity may be noted in Examples 18, 20, 23, 25, 26, and 27.

PERMEABILITY CONSTANT VS. NH/EPOXY RATIO AT HIGHER RELATIVE HUMIDITY

Another series of polyepoxide-polyamine coatings was prepared with varying ratios of polyamine to polyepoxide and tested for oxygen permeability at high relative humidity levels. The results are reported in Table II. As the polyamine adduct, each composition in this series employed "GASKAMINE 328" polyamine from Mitsubishi Gas Chemical Company, which is a reaction product of metaxylylene diamine and epichlorohydrin. In half of the compositions the polyepoxide was "DEN-431" from Dow Chemical Company, a epoxy novolac resin. In the other half of the compositions the polyepoxide was "TETRAD X" from Mitsubishi Gas Chemical Company, a tetraglycidyl reaction product of metaxylylene diamine. The following is a typical sample preparation for this series of examples.

A sample for oxygen permeability testing was prepared by adding to a sample container 8.0 grams (0.145 equivalent) of GASKAMINE 328, 18.0 grams of 1-methoxy-2-propanol, 0.2 grams of water, and 0.04 grams of SF-1023 silicone surfactant from General Electric. The sample was stirred by hand until homogeneous, and 9.5 grams of (0.052 equivalents) of DEN-431 epoxy resin were added to yield a sample NH/epoxy ratio of 2.8. The sample was again stirred until homogeneous and then allowed to stand for a length of time adequate to allow sufficient ingestion to occur such that clear films could be obtained (about one hour). A 0.68 mm (0.028 inch) diameter wire wound bar was used to draw down the sample on 0.025 mm (2 mil) polyethylene teraphthalate (PET) film. The coated film sample was heated for 30 minutes at 145°F in a laboratory oven to produce a cured coating of about 0.013-0.015 mm (0.5-0.6 mil). The coating sample was allowed to age at ambient temperature for four days prior to testing. Oxygen transmission rates were measured at 30°C using an OXTRAN 2/20 for the 50-55% relative humidity and 70-75% relative humidity results. Oxygen permeability constants for the coating samples were calculated from the equation set forth previously. The other coating samples were prepared and tested in the same manner, using the appropriate weights of polyamine component and polyepoxy component to achieve the indicated NH/epoxy ratio and sufficient 1-methoxy-2-propanol to yield a sample of 35-40 percent solids.

TABLE II

| Example No. | Epoxy Resin | NH*/Epoxy | $P_{O2}$ (cc-mil/100in$^2$/atm/day) @ 30°C ** | |
|---|---|---|---|---|
| | | | 50-55% R.H. | 70-75% R.H. |
| 37 | DEN-431 | 1.0 | 0.77 | 0.75 |
| 38 | " | 1.5 | 0.56 | 0.53 |
| 39 | " | 2.0 | 0.25 | 0.29 |
| 40 | " | 2.5 | 0.25 | 0.44 |
| 41 | " | 2.8 | 0.25 | 0.55 |
| 42 | " | 3.0 | 0.30 | 1.20 |
| 43 | " | 3.5 | 0.29 | 1.35 |
| 44 | TETRAD-X | 1.0 | 0.25 | 0.40 |
| 45 | " | 1.5 | 0.11 | 0.13 |
| 46 | " | 2.0 | 0.10 | 0.15 |
| 47 | " | 2.3 | 0.06 | 0.19 |
| 48 | " | 2.6 | 0.09 | 0.26 |
| 49 | " | 3.0 | 0.10 | 0.68 |
| 50 | " | 3.5 | 0.21 | 2.54 |

*Amine component was GASKAMINE 328 in each of these examples.
** to convert to units of cm$^3$-mm/100 cm$^2$/bar/day, multiply the tabulated values by 0.00389.

It may be noted that the data in Table II show minimized permeability at NH/epoxy ratios above 1.5. It can also be seen that excessive amounts of NH (e.g., ratios above 3.0) result in increased permeability, particularly at higher humidity.

The permeabilities in the examples above have been given only for oxygen because of the availability of equipment for measuring oxygen permeabilities at various levels of relative humidity. It has been observed that permeabilities for carbon dioxide (as well as some other gases) parallel that of oxygen. That the coatings of the present invention exhibit very low carbon dioxide permeabilities is demonstrated in Examples 51-56, the results of which are reported in Table III. The procedure for Examples 51-56 was the same as the previous examples and employed several of the polyamine functional adducts described above, and were cured with the polyepoxides stated in Table III at the amine hydrogen equivalent to epoxy group equivalent ratios indicated. Carbon dioxide permeabilities were measured with a Mocon PERMATRAN C-IV at 0% relative humidity at 30°C. Units of the carbon dioxide permeability constant in Table III are cc-mil/100 inch$^2$/atm/day. The constants can be converted to units of cm$^3$-mm/100 cm$^2$/bar/day by multiplying the tabulated values by 0.00389.

TABLE III

| Example No. | Polyamine Adduct | Polyepoxide | NH/Epoxy | $CO_2$ Permeability Constant |
|---|---|---|---|---|
| 51 | J (MXDA+ epichlorohydrin) | DEN-431 | 3.0 | 0.08 |
| 52 | J (MXDA+epichlorohydrin) | EPON 862 | 3.0 | 0.17 |
| 53 | J (MXDA+epichlorohydrin) | TETRAD X | 2.3 | 0.06 |
| 54 | B (MXDA+RDGE) | TETRAD X | 2.3 | 0.35 |
| 55 | M (Mannich base) | TETRAD X | 2.5 | 0.49 |

TABLE III (continued)

| Example No. | Polyamine Adduct | Polyepoxide | NH/Epoxy | $CO_2$ Permeability Constant |
|---|---|---|---|---|
| 56 | J (MXDA+ epichlorohydrin) | DEN-444 | 3.0 | 0.08 |

The invention has been described in connection with specific embodiments in order to prove the best mode of the invention, but it should be understood that other variations and modifications as are known to those of skill in the art may be resorted to without departing from the scope of the invention as defined by the claims which follow.

## Claims

1. A barrier coating comprising the reaction product of a polyamine (A) and a polyepoxide (B) at a ratio of active amine hydrogen in (A) to epoxy group in (B) of at least 1.5:1, wherein the polyamine (A) is an ungelled reaction product of:

   (I) an initial polyamine in which at least 50% of the carbon atoms are aromatic; and
   (II) at least one of the following:

      (a) epichlorohydrin;
      (b) a polyepoxide having the structure

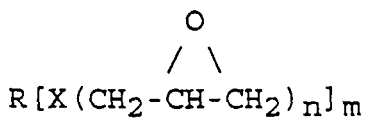

      where

      R is phenylene or naphthylene;
      X is N, NR', $CH_2N$, $CH_2NR'$, O, C(O)-O, or combinations thereof;
      R' is an alkyl group containing 1-3 carbon atoms, or a cyanoethyl or cyanopropyl group
      n is 1 or 2
      m is 2-4;

      (c) ; a novolac epoxy resin or a bisphenol F epoxy resin; or
      (d) formaldehyde and a phenol of the structure

$$R''\text{-}OH$$

      where

      R'' is an aromatic group or fused aromatic group which may contain alkyl substitutions of 1-4 carbon atoms.

2. The coating of claim 1 wherein the initial polyamine is a compound in which at least 60% of the carbon atoms are aromatic.

3. The coating of claim 1 wherein the initial polyamine is an aminomethyl polysubstituted benzene or naphthalene compound.

4. The coating of claim 1 wherein the polyepoxide (B) is a polyepoxide having the structure

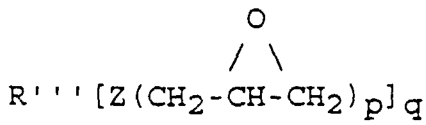

where

R''' is phenylene or naphthylene
Z is N, NR', $CH_2N$, $CH_2NR'$, O, C(O)-O, or combinations thereof
R' is an alkyl group containing 1-3 carbon atoms, or a cyanoethyl or cyanopropyl group
p is 1 or 2
q is 2-4.

**5.** The coating of claim 1 wherein the polyepoxide (B) comprises N,N,N',N'-tetrakis (oxiranylmethyl)-1,3-benzene dimethanamine.

**6.** The coating of claim 5 wherein the polyepoxide (b) comprises N,N,N',N'-tetrakis (oxiranylmethyl)-1,3-benzene dimethanamine.

**7.** The coating of claim 1 comprising a cured polymer network containing at least 50 percent on a weight basis of aminomethyl polysubstituted benzene or naphthalene groups.

**8.** The coating of claim 1 comprising a cured polymer network containing at least 50 percent on a weight basis of xylylenediamine groups.

**9.** The coating of claim 6 comprising a cured polymer network containing 20 to 40 percent 2-hydroxypropylene groups.

**10.** The coating of claim 9 comprising a cured polymer network containing at least 75 percent on a weight basis of a combination of aminomethyl polysubstituted benzene or naphthalene groups and 2-hydroxypropylene groups.

**11.** The coating of claim 10 wherein the polyamine (A) comprises the reaction product of metaxylylenediamine and epichlorohydrin.

**12.** The coating of claim 11 wherein the polyepoxide (B) is selected from the group consisting of N,N,N',N'-tetrakis (oxiranylmethyl)-1,3-benzene dimethanamine, tetraglycidoxy bis(para-aminophenyl) methane, resorcinol diglycidyl ether, diglycidyl esters of phthalic acid, triglycidyl para-aminophenol, novolac epoxy resins, and bisphenol F epoxy resins.

**13.** The coating of claim 1 comprising a cured polymer network consisting of at least 85 percent on a weight basis of aminomethyl polysubstituted benzene or naphthalene groups in combination with 2-hydroxypropylene groups, and optionally -O-Φ-O- and/or -O-Φ-N<groups.

**14.** The coating of claim 1 wherein the initial polyamine comprises xylylenediamine.

**15.** The coating of claim 1 wherein X is $CH_2N$, n=2, and m=2.

**16.** The coating of claim 4 wherein Z is $CH_2N$, p=2, and q=2.

**17.** The coating of claim 1 where R is phenylene.

**18.** The coating of claim 1 wherein the initial polyamine comprises aminomethyl polysubstituted benzene or naphthalene.

**19.** The coating of claim 1 wherein the initial polyamine comprises xylylene diamine.

**20.** The coating of claim 1 wherein the ratio of active amine hydrogen in (A) to epoxy group in (B) is at least 1.8:1.

**21.** The coating of claim 1 wherein the initial polyamine is reacted with epichlorohydrin at a molar ratio of polyamine to epichlorohydrin of 2:1 to 1:1.

**22.** A packaging material comprising a layer of relatively permeable polymeric material, and carrying thereon the coating of claim 1.

**23.** A container comprising a body molded from relatively permeable polymeric material, and carrying thereon the coating of claim 1.

**Patentansprüche**

**1.** Schutzbeschichtung, die das Reaktionsprodukt eines Polyamins (A) und eines Polyepoxids (B) in einem Verhältnis von aktivem Aminwasserstoff in (A) zu Epoxygruppe in (B) von wenigstens 1.5 : 1 umfaßt, wobei das Polyamin (A) ein ungeliertes Reaktionsprodukt von folgendem ist:

(I) einem Anfangspolyamin, in dem wenigstens 50% der Kohlenstoffatome aromatisch sind, und
(II) wenigstens einem der folgenden Stoffe:

(a) Epichlorhydrin,
(b) einem Polyepoxid mit folgender Struktur

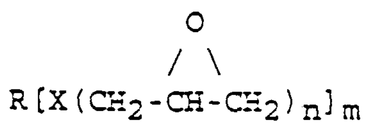

worin

R gleich Phenylen oder Naphthylen ist;
X gleich N, NR', $CH_2N$, $CH_2NR'$, O, C(O)-O ist, oder Kombinationen davon;
R' eine Alkylgruppe ist, die 1-3 Kohlenstoffatome oder eine Cyanoethyl- oder Cyanopropylgruppe enthält;
n gleich 1 oder 2 ist;
m gleich 2-4 ist;

(c) einem Novolakepoxyharz oder einem Bisphenol F Epoxyharz; oder
(d) Formaldehyd und einem Phenol folgender Struktur

R''-OH

worin R'' eine aromatische Gruppe oder eine annelierte aromatische Gruppe ist, die Alkylsubstitutionen mit 1-4 Kohlenstoffatomen enthalten kann.

**2.** Beschichtung nach Anspruch 1, worin das Anfangspolyamin eine Verbindung ist, in der wenigstens 60% der Kohlenstoffatome aromatisch sind.

**3.** Beschichtung nach Anspruch 1, worin das Anfangspolyamin eine Aminomethyl-polysubstituierte Benzol- oder Naphthalinverbindung ist.

**4.** Beschichtung nach Anspruch 1, worin das Polyepoxid (B) ein Polyepoxid mit folgender Struktur ist:

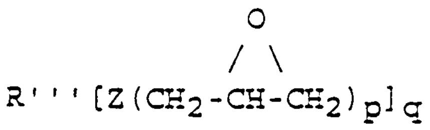

worin

R''' gleich Phenylen oder Naphthylen ist
Z gleich N, NR', $CH_2N$, $CH_2NR'$, O, C(O)-O ist, oder Kombinationen davon
R' eine Alkylgruppe ist, die 1-3 Kohlenstoffatome enthält, oder eine Cyanoethyl- oder Cyanopropylgruppe
p gleich 1 oder 2 ist
q gleich 2-4 ist.

**5.** Beschichtung nach Anspruch 1, worin das Polyepoxid (B) N,N,N',N'-tetrakis(oxiranylmethyl)-1,3-benzoldimethanamin umfaßt.

**6.** Beschichhtung nach Anspruch 5, worin das Polyepoxid (b) N,N,N',N'-tetrakis(oxiranylmethyl)-1,3-benzoldimethanamin umfaßt.

**7.** Beschichtung nach Anspruch 1, die ein vernetztes Polymernetzwerk umfaßt, das wenigstens 50 Prozent in Gewichtsanteilen an Aminomethyl-polysubstituierten Benzol- oder Naphthalingruppen enthält.

**8.** Beschichtung nach Anspruch 1, die ein vernetztes Polymernetzwerk umfaßt, das wenigstens 50 Prozent in Gewichtsanteilen an Xylylendiamingruppen umfaßt.

**9.** Beschichtung nach Anspruch 6, die ein vernetztes Polymernetzwerk umfaßt, das 20 bis 40 Prozent 2-Hydroxypropylengruppen enthält.

**10.** Beschichtung nach Anspruch 9, die ein vernetztes Polymernetzwerk umfaßt, das wenigstens 75 Prozent in Gewichtsanteilen einer Kombination von Aminomethylpolysubstituierten Benzol- oder Naphthalingruppen und 2-Hydroxypropylengruppen enthält.

**11.** Beschichtung nach Anspruch 10, worin das Polyamin (A) das Reaktionsprodukt von Metaxylylendiamin und Epichlorhydrin umfaßt.

**12.** Beschichtung nach Anspruch 11, worin das Polyepoxid (B) aus der Gruppe gewählt ist, die aus N,N,N',N'-tetrakis(oxiranylmethyl)-1,3-benzoldimethanamin, Tetraglycidoxybis(para-aminophenyl)methan, Resorcinol, Diglycidylether, Diglycidylestern von Phtahlsäure, Triglycidyl-para-Aminophenol, Novolakepoxyharzen, und Bisphenol F Epoxyharzen besteht.

**13.** Beschichtung nach Anspruch 1, die ein vernetztes Polymernetzwerk umfaßt, das wenigstens zu 85 Prozent in Gewichtsanteilen aus Aminomethyl-polysubstituierten Benzol- oder Naphthalingruppen in Kombination mit 2-Hydroxypropylengruppen und wahlweise -O-ϕ-O- und/oder -O-ϕ-N< Gruppen besteht.

**14.** Beschichtung nach Anspruch 1, worin das Anfangspolyamin Xylylendiamin umfaßt.

**15.** Beschichtung nach Anspruch 1, worin X gleich $CH_2N$ ist, n=2, und m=2.

**16.** Beschichtung nach Anspruch 4, worin Z gleich $CH_2N$ ist, p=2 und q=2.

**17.** Beschichtung nach Anspruch 1, worin R gleich Phenylen ist.

**18.** Beschichtung nach Anspruch 1, worin das Anfangspolyamin Aminomethyl-polysubstituiertes Benzol oder Naphthalin umfaßt.

**19.** Beschichtung nach Anspruch 1, worin das Anfangspolyamin Xylylendiamin umfaßt.

**20.** Beschichtung nach Anspruch 1, worin das Verhältnis von aktivem Aminwasserstoff in (A) zu Epoxygruppen in (B) wenigstens 1,8:1 beträgt.

**21.** Beschichtung nach Anspruch 1, worin das Anfangspolyamin mit Epichlorhydrin in einem molaren Verhältnis von Polyamin zu Epichlorhydrin von 2:1 bis 1:1 umgesetzt wird.

**22.** Verpackungsmaterial, das eine Schicht von relativ durchlässigem Polymermaterial umfaßt, und das darüber die Beschichtung nach Anspruch 1 trägt.

**23.** Ein Behälter, der einen Rumpf umfaßt, der aus relativ durchlässigem Polymermaterial geformt ist, und der darüber die Beschichtung nach Anspruch 1 trägt.

## Revendications

**1.** Un revêtement protecteur comprenant le produit de réaction d'une polyamine (A) et d'un polyépoxyde (B) dans un rapport de l'hydrogène actif de l'amine dans (A) au groupe époxy dans (B) d'au moins 1,5:1, dans lequel la polyamine (A) est un produit de réaction non gélifié de:

(I) une polyamine initiale dans laquelle au moins 50% des atomes de carbone sont aromatiques; et
(II) au moins l'un d'entre:

(a) l'épichlorhydrine;
(b) un polyépoxyde de structure

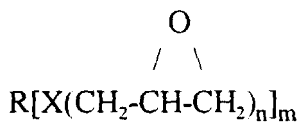

dans laquelle

R est un phénylène ou un naphtylène;
X est N, NR', $CH_2N$, $CH_2NR'$, O, C(O)-O, ou des combinaisons de ceux-ci;
R' est un groupe alkyle contenant 1-3 atomes de carbone, ou un groupe cyanoéthyle ou cyanopropyle;
n est 1 ou 2;
m est 2-4;

(c) une résine époxy novolaque ou une résine époxy bisphénol F; ou
(d) le formaldéhyde et un phénol de structure

R''-OH

dans laquelle R'' est un groupe aromatique ou un groupe aromatique condensé qui peut contenir des substituants alkyle de 1-4 atomes de carbone.

**2.** Le revêtement selon la revendication 1 dans lequel la polyamine initiale est un composé dans lequel au moins 60% des atomes de carbone sont aromatiques.

**3.** Le revêtement selon la revendication 1 dans lequel la polyamine initiale est un composé du benzène ou du naphtalène polysubstitué par des aminométhyles.

**4.** Le revêtement selon la revendication 1 dans lequel le polyépoxyde (B) est un polyépoxyde de structure

O
/ \
$R'''[Z(CH_2\text{-}CH\text{-}CH_2)_p]_q$

dans laquelle

R''' est un phénylène ou un naphtylène;
Z est N, NR', $CH_2N$, $CH_2NR'$, O, C(O)-O, ou des combinaisons de ceux-ci;
R' est un groupe alkyle contenant 1-3 atomes de carbone, ou un groupe cyanoéthyle ou cyanopropyle;
p est 1 ou 2;
q est 2-4.

**5.** Le revêtement selon la revendication 1 dans lequel le polyépoxyde (B) comprend la N,N,N',N'-tétrakis(oxiranylméthyl)-1,3-benzène diméthanamine.

**6.** Le revêtement selon la revendication 5 dans lequel le polyépoxyde (b) comprend la N,N,N',N'-tétrakis(oxiranylméthyl)-1,3-benzène diméthanamine.

**7.** Le revêtement selon la revendication 1 comprenant un réseau polymère réticulé contenant au moins 50 pour-cent en poids de groupes benzène ou naphtalène polysubstitués par des aminométhyles.

**8.** Le revêtement selon la revendication 1 comprenant un réseau polymère réticulé contenant au moins 50 pour-cent en poids de groupes xylylènediamine.

**9.** Le revêtement selon la revendication 6 comprenant un réseau polymère réticulé contenant de 20 à 40 pour-cent de groupes 2-hydroxypropylène.

**10.** Le revêtement selon la revendication 9 comprenant un réseau polymère réticulé contenant au moins 75 pour-cent en poids d'une combinaison de groupes benzène ou naphtalène polysubstitués par des aminométhyles et de groupes 2-hydroxypropylène.

**11.** Le revêtement selon la revendication 10 dans lequel la polyamine (A) comprend le produit de réaction de la métaxylylènediamine et de l'épichlorhydrine

**12.** Le revêtement selon la revendication 11 dans lequel le polyépoxyde (B) est choisi parmi le groupe consistué de la N,N,N',N'-tétrakis(oxiranylméthyl)-1,3-benzène diméthanamine, du tétraglycidoxy bis(para-aminophényl) méthane, de l'éther diglycidylique du résorcinol, des esters diglycidyliques de l'acide phtalique, du triglycidyl para-aminophénol, des résines époxy novolaques et des résines époxy bisphénol F.

**13.** Le revêtement selon la revendication 1 comprenant un réseau polymère réticulé consistué d'au moins 85 pour-cent en poids de groupes benzène ou naphtalène polysubstitués par des aminométhyles en combinaison avec des groupes 2-hydroxypropylène et éventuellement des groupes -O-Φ-O- et/ou -O-Φ-N<.

**14.** Le revêtement selon la revendication 1 dans lequel la polyamine initiale comprend la xylylènediamine.

**15.** Le revêtement selon la revendication 1 dans lequel X est $CH_2N$, n=2 et m=2.

**16.** Le revêtement selon la revendication 4 dans lequel Z est $CH_2N$, p=2 et q=2.

**17.** Le revêtement selon la revendication 1 dans lequel R est un phénylène.

**18.** Le revêtement selon la revendication 1 dans lequel la polyamine initiale comprend un benzène ou un naphtalène polysubstitué par des aminométhyles.

**19.** Le revêtement selon la revendication 1 dans lequel la polyamine initiale comprend la xylylène diamine.

**20.** Le revêtement selon la revendication 1 dans lequel le rapport de l'hydrogène actif de l'amine dans (A) au groupe époxy dans (B) est d'au moins 1,8:1.

**21.** Le revêtement selon la revendication 1 dans lequel la polyamine initiale est mise à réagir avec l'épichlorhydrine dans un rapport molaire de la polyamine à l'épichlorhydrine de 2:1 à 1:1.

**22.** Un matériau d'emballage comprenant une couche de matériau polymère relativement perméable et recouvert du revêtement selon la revendication 1.

**23.** Un récipient comprenant un corps moulé en un matériau polymère relativement perméable et recouvert du revêtement selon la revendication 1.